# FASCICULE DE BREVET EUROPEEN

(11) **EP 0 889 404 B1**
(45) Date de publication et mention de la délivrance du brevet: **24.03.2004**
(21) Numéro de dépôt: 98401450.6
(22) Date de dépôt: 15.06.1998
(51) Int. Cl.: G06F 9/46, G06F 12/02

(54) **Procédé pour isoler un emplacement de memoire contenant une valeur obsolete**
Verfahren zur Isolierung eines Speicherplatzes mit einem veralteten Datum
Method for isolating a memory location storing an obsolete value

(30) Priorité: 19.06.1997 FR 9707636
(43) Date de publication de la demande: 07.01.1999
(73) Titulaire: ALCATEL, 75008 Paris (FR)
(72) Inventeur: Guidot, Dominique, 92310 Sevres (FR); Jouenne, Franck, 94420 Le Plessis Trevise (FR); Paul-Dubois-Taine, Benoit, 92340 Bourg la Reine (FR)
(74) Mandataire: Sciaux, Edmond

(56) Documents cités:
- EP-A- 0 713 179
- US-A- 5 218 698
- SHAVIT N ET AL: "SOFTWARE TRANSACTIONAL MEMORY" PROCEEDINGS OF FOURTEENTH ACM SIGACT-SIGOPS ,OTTAWA, ONT., CANADA, 20 août 1995, pages 204-213, XP000643146

## Description

L'invention concerne un procédé pour isoler un emplacement de mémoire contenant une valeur obsolète, ce procédé étant applicable pour toute application en temps réel et/ou embarquée, utilisant un gestionnaire de données gérant une mémoire partagée dite transactionnelle, et permettant d'accéder aux données par des pointeurs. Une telle mémoire est la mémoire centrale d'un ordinateur dans lequel sont exécutés simultanément plusieurs processus. Chaque processus est lui-même généralement constitué de plusieurs tâches élémentaires qui peuvent être en concurrence pour accéder à des données pour les lire et pour les modifier. La mémoire est structurée en éléments de taille fixe qui seront appelés emplacements mémoires, dans ce qui suit.

Dans un ordinateur, on distingue la mémoire centrale qui a une capacité limitée mais où tous les emplacements sont accessibles directement, donc de manière très rapide, et une mémoire de masse constituée généralement d'un disque dur, ayant une capacité beaucoup plus importante mais un accès beaucoup moins rapide puisqu'il faut sélectionner une piste puis attendre que l'emplacement recherché sur une piste se présente en face d'une tête de lecture. Classiquement, le système d'exploitation de l'ordinateur ne charge dans la mémoire centrale que les données qui sont effectivement nécessaires à un instant donné, et le chargement est réalisé par l'intermédiaire d'une petite mémoire rapide et spécialisée, qui est appelée mémoire cache et qui procure une accélération apparente de l'accès au disque dur, par un mécanisme d'anticipation qui exploite le fait que les données sont généralement utilisées séquentiellement par les applications. Les gestionnaires de données classiques ont donc été optimisés en tenant compte du fait que les données transitent par une mémoire cache.

Les progrès de la technologie des mémoires à semi-conducteur permettent maintenant de réaliser une mémoire centrale ayant une capacité suffisante pour charger en mémoire centrale l'ensemble des données partagées par tous les processus exécutés dans un ordinateur, même pour des applications manipulant de gros volumes de données. Le disque dur n'a alors que le rôle de sauvegarde des données, en conservant une réplique mise à jour de toutes les données qui sont en mémoire centrale. Le chargement de toutes les données en mémoire centrale est particulièrement avantageux pour les applications qui n'exploitent pas les données séquentiellement, une mémoire cache n'apportant que peu de bénéfice à ces applications. C'est le cas, en particulier, des applications commandant les autocommutateurs de télécommunication.

On connaît des gestionnaires de données pour des bases de données orientées objets, et des gestionnaires de données pour des bases de données relationnelles.

Il y a deux types d'accès à une donnée : accès en lecture ou accès en écriture. Pour chaque type d'accès, on connaît deux modes de transfert d'informations entre le gestionnaire de données et une tâche élémentaire : un mode de transfert par valeur, et un mode de transfert par pointeur.

Pour un accès en lecture (respectivement en écriture) à la valeur d'une variable, le mode de transfert par valeur consiste à lire (respectivement écrire) une valeur de la variable dans l'emplacement mémoire qui contient la valeur courante de la variable ; alors que le mode de transfert par pointeur consiste à fournir, à la tâche qui a demandé la lecture (respectivement l'écriture), une adresse, appelée pointeur, qui désigne l'emplacement mémoire où est située la valeur à lire (respectivement l'emplacement où sera écrite une valeur), la tâche étant libre ensuite de lire (respectivement écrire) dans cet emplacement pendant tout le temps où elle possède ce pointeur. Lorsqu'une tâche accède à une variable, dans le mode par pointeur, il est connu d'attribuer un verrou appelé "hold" à l'emplacement mémoire qui contient la valeur courante de cette variable, pour cette tâche. Ce hold interdit l'accès de cet emplacement à toute autre tâche, afin de maintenir la consistance des données vues par chaque tâche. La tâche qui possède un hold sur un emplacement mémoire contenant une valeur d'une variable peut accéder à cet emplacement aussi souvent qu'elle le souhaite, et jusqu'à ce qu'elle décide de relâcher ce hold.

Le mode de transfert par pointeur est connu dans des gestionnaires de données orientés objets. Il a l'avantage de permettre des accès rapides. Il permet de manipuler une donnée comme une variable d'un langage de programmation. Mais les gestionnaires de données orientés objets ont pour inconvénient : soit de ne pas offrir de transactions multitâches (Par conséquent il n'y a pas de concurrence), soit de ne pas offrir de verrouillage au niveau d'un objet (Toute concurrence entraîne le verrouillage d'une page et entraîne la copie complète de cette page dans un journal. Ce niveau de granularité entraîne donc un surcoût).

Le mode de transfert par valeur est utilisable sans gérer une concurrence d'accès, au niveau des applications. La concurrence des accès est gérée principalement au moyen de verrous d'écriture ou de lecture qui sont attribués par le gestionnaire de données, de la base.

Un ensemble d'opérations de lecture et/ou d'opérations d'écriture, portant sur plusieurs variables, demandées par une tâche dans une même requête, est appelé transaction. Dans une transaction chaque opération peut être réalisée soit avec le mode de transfert par valeur, soit avec le mode de transfert par pointeur. Toute transaction se décompose en trois phases :
- Une phase d'ouverture, pendant laquelle le gestionnaire de données fournit un identificateur de transaction, unique, à la tâche qui a ouvert la transaction, cet identificateur désignant un emplacement mémoire contenant un descripteur de la transaction ;
- Une phase d'accès, pendant laquelle des opérations de lecture ou d'écriture sont exécutées par la tâche ayant ouvert la transaction, mais restent invisibles pour les utilisateurs autres que cette transaction ; et pendant laquelle des droits appelés verrous de lecture et verrous d'écriture sont attribués à cette transaction, pour l'emplacement mémoire concerné. Selon l'un des procédés d'accès connus, lorsqu'une transaction réalise un accès en écriture, elle inscrit provisoirement la nouvelle valeur de la variable dans un emplacement mémoire appelé journal et qui est attribué à cette transaction pour cette variable. Ce journal n'est accessible que par cette transaction.
- Une phase de fermeture, ou validation, pendant laquelle les écritures et les lectures sont validées. Selon le procédé connu évoqué ci-dessus, les nouvelles valeurs (qui sont contenues dans les journaux attribués à cette transaction) sont inscrites dans les emplacements contenant respectivement les valeurs courantes, et elles deviennent visibles par toutes les tâches. Les valeurs à lire sont effectivement lues. Les journaux, les verrous, et les holds attribués à cette transaction sont libérés.

Cependant il peut arriver qu'une transaction soit avortée, soit à la demande de la tâche ayant demandé l'ouverture de cette transaction, soit à cause d'un conflit avec une autre transaction, soit à cause d'une incohérence d'une requête constituant cette transaction.

Un verrou peut être attribué à l'emplacement mémoire contenant la valeur courante ou la nouvelle valeur d'une variable qui est l'objet d'une transaction, pour interdire d'autres opérations qui compromettraient la consistance des données. Un verrou peut être attribué à l'ensemble d'une table de données.

Certains protocoles transactionnels permettent d'effectuer une transaction en garantissant quatre propriétés appelées ACID :
- l'atomicité (l'ensemble des accès demandés par une transaction sont traités ou aucun) ;
- la consistance (L'ensemble des données passe d'un état stable à un autre état stable) ;
- l'isolation (les nouvelles valeurs des variables ne sont pas visibles à l'extérieur de la transaction, avant que celle-ci soit fermée) ;
- la durabilité (Dés qu'une transaction est validée, les nouvelles valeurs des variables résistent aux défaillances de la station sur laquelle elles sont mémorisées ; ces valeurs étant sauvegardées sur un disque ou sur une autre station en état de fonctionner) ;
- la sérialisation (si plusieurs transactions se déroulent en parallèle, leur résultat est le même que si elles se déroulaient successivement).

La demande brevet FR 2 727 222 décrit un tel protocole transactionnel. Les gestionnaires de données connus garantissent les propriétés ACID mais ils ont l'inconvénient de ne pas offrir l'accès par pointeur qui permettrait un accès plus rapide. Ils ne sont donc pas complètement satisfaisants.

Dans le cadre d'un système où l'ensemble des données est chargé dans une mémoire centrale à semi-conducteur, Il est possible de réaliser des accès par pointeurs, dans une transaction ou hors transaction, mais l'utilisation de pointeurs, et donc de holds, fait naître un inconvénient : Lorsqu'une première transaction est avortée, un hold peut resté attribué à un emplacement mémoire alors que la valeur contenue dans cet emplacement est devenue obsolète. Cette valeur est obsolète parce que cet emplacement est le journal contenant la valeur courante d'une variable, ou la valeur nouvelle que cette première transaction voulait donner à cette variable.

Ce hold continue à interdire l'accès à cet emplacement, et donc continue à interdire l'accès à cette variable, parce que cet emplacement mémoire reste attribué à cette variable pour stocker respectivement sa valeur courante ou sa valeur nouvelle. Cette variable reste donc inaccessible inutilement, jusqu'à ce que l'application qui possède ce hold décide de le relâcher. Pendant ce temps, une ou plusieurs autres transactions attendent peut-être pour accéder à cette variable. Cette attente inutile grève les performances globales du système.

Le but de l'invention est de remédier à cet inconvénient.

L'objet de l'invention est un procédé pour isoler un emplacement de mémoire contenant une valeur obsolète d'une variable, dans une mémoire partagée d'un ordinateur, cet emplacement étant référencé par un pointeur pour un accès dans le cadre d'une première transaction, un verrou appelé hold étant posé sur cet emplacement et étant attribué à une seule tâche, ce hold interdisant l'accès de cet emplacement à toutes les autres tâches caractérisé en ce que :
- si cette première transaction est une transaction avortée, et :
   -- si la valeur obsolète est une nouvelle valeur de cette variable, il consiste à effacer, dans le descripteur de cette variable, l'identité de la transaction avortée, et l'adresse de cet emplacement, et écrire cette adresse dans le descripteur de ladite transaction ; puis relâcher ce hold ;
   -- si la valeur obsolète était précédemment la valeur courante de ladite variable, il consiste à effacer, dans le descripteur de ladite variable, l'identité de la transaction avortée, et l'adresse de cet emplacement, et l'écrire dans le descripteur de ladite transaction ; puis relâcher le hold attribué au pointeur ; puis attribuer un emplacement de mémoire libre à la valeur courante, écrire cette valeur courante dans cet emplacement, et écrire l'adresse de cet emplacement dans le descripteur de cette variable ;
- si cette première transaction est une transaction avortée à cause d'une seconde transaction qui demande à accéder à cette variable pour écrire une nouvelle valeur, et qui valide cet accès, et si la valeur obsolète était précédemment la valeur courante de la variable, il consiste à échanger l'adresse des emplacements qui contiennent respectivement la valeur courante obsolète (Vcou) et la nouvelle valeur, dans le descripteur de cette variable ; et consiste à poser un hold sur l'emplacement contenant la valeur obsolète, pour empêcher une modification de la valeur obsolète ; effacer l'identité de la seconde transaction ; puis relâcher le hold attribué au pointeur pour cette nouvelle valeur, s'il y en avait un.

Le procédé ainsi caractérisé ne libère pas l'emplacement contenant la valeur obsolète, mais l'isole vis à vis des transactions autres que celle qui possède le premier pointeur. Ceci permet à la tâche propriétaire du premier pointeur de continuer à accéder à cette valeur obsolète. Par contre, des transactions quelconques peuvent accéder à une autre valeur de la variable, sans attendre, puisque le descripteur de cette variable renvoie ces transactions vers un emplacement qui est libre d'accès et qui contient cette autre valeur.

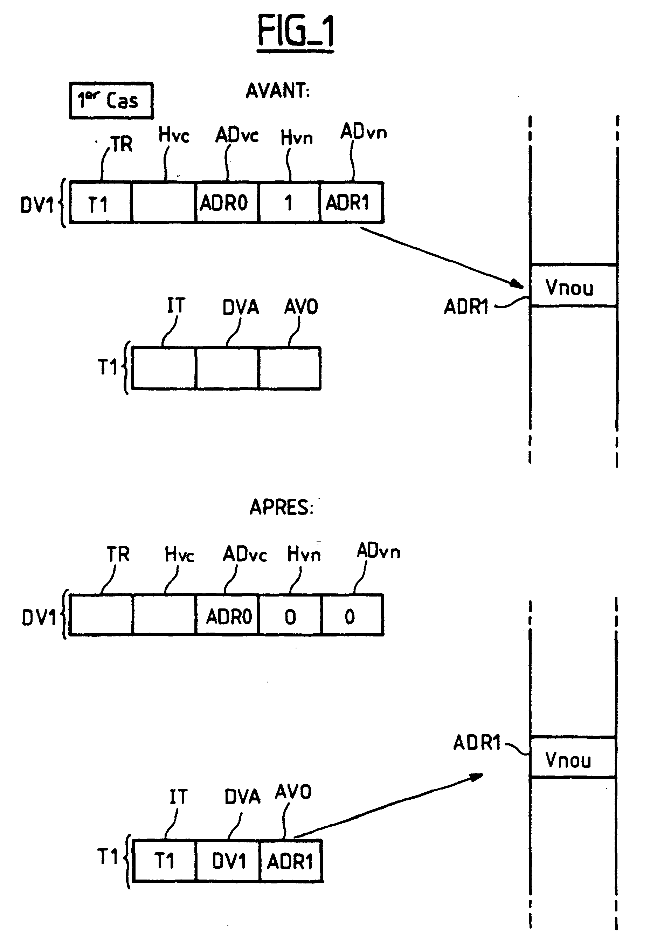

L'invention sera mieux comprise et d'autres caractéristiques apparaîtront à l'aide de la description ci-dessous d'un exemple de mise en oeuvre, et des figures l'accompagnant : Les figures 1 à 3 illustrent respectivement les trois cas qui peuvent se présenter.

Selon l'invention, un gestionnaire de données attribue à chaque variable un descripteur de variable qui contient les informations suivantes qui sont exploitées par ce gestionnaire de données :
- L'identité TR de la transaction ayant demandé un accès en écriture à cette variable, si cette demande d'accès est faite dans le cadre d'une transaction.
- L'adresse ADvc d'un emplacement mémoire contenant la valeur courante de cette variable.
- Un indicateur binaire Hvc indiquant si un hold a été attribué à un pointeur référençant l'emplacement contenant la valeur courante de cette variable.
- L'adresse ADvn d'un emplacement mémoire contenant la valeur nouvelle destinée à remplacer la valeur courante de cette variable.
- Un indicateur binaire Hvn indiquant si un hold a été attribué pour l'emplacement la valeur nouvelle de cette variable.

Le gestionnaire de données attribue à chaque transaction un descripteur de transaction qui contient les informations suivantes qui sont exploitées par le gestionnaire de données :
- L'identité IT de cette transaction.
- Les adresses ADV des descripteurs des variables qui sont accédées en écriture par cette transaction.
- Les adresses AVO des emplacements contenant les valeurs obsolètes respectives des variables qui sont accédées en écriture par cette transaction.

La figure 1 illustre l'application du procédé selon l'invention dans un cas où une transaction T1 a avortée, et où un pointeur, attribué à cette transaction T₁, référence l'emplacement ADR1 d'une valeur Vnou qui est la nouvelle valeur d'une variable V1. Le descripteur DV1 de la variable V1 contient : l'identité T1 de cette transaction, l'adresse ADR1 de l'emplacement contenant cette nouvelle valeur, l'adresse ADR0 de l'emplacement (non représenté) contenant la valeur courante de cette variable, et un indicateur Hvn=1 indiquant qu'un hold a été attribué à cette transaction T1. Ce hold interdit de lire ou modifier la nouvelle valeur Vnou de cette variable, sauf à la transaction T1 possédant ce hold.

La valeur Vnou est obsolète puisque la transaction T1 a été avortée. Le gestionnaire de données efface, dans le descripteur V1 de cette variable, l'identité T1 de la transaction avortée, et l'adresse ADR1 de cet emplacement. Il écrit cette adresse ADR1 dans le descripteur T1 de ladite transaction. Puis il relâche le hold en remettant à zéro la valeur de l'indicateur Hvn dans le descripteur DV1 de la variable. Ainsi d'autres utilisateurs peuvent désormais accéder à cette variable et lui donner une nouvelle valeur quelconque, alors que la transaction T1 peut continuer à accèder à sa nouvelle valeur, pendant le temps nécessaire pour qu'elle se rende compte qu'elle a été avortée.

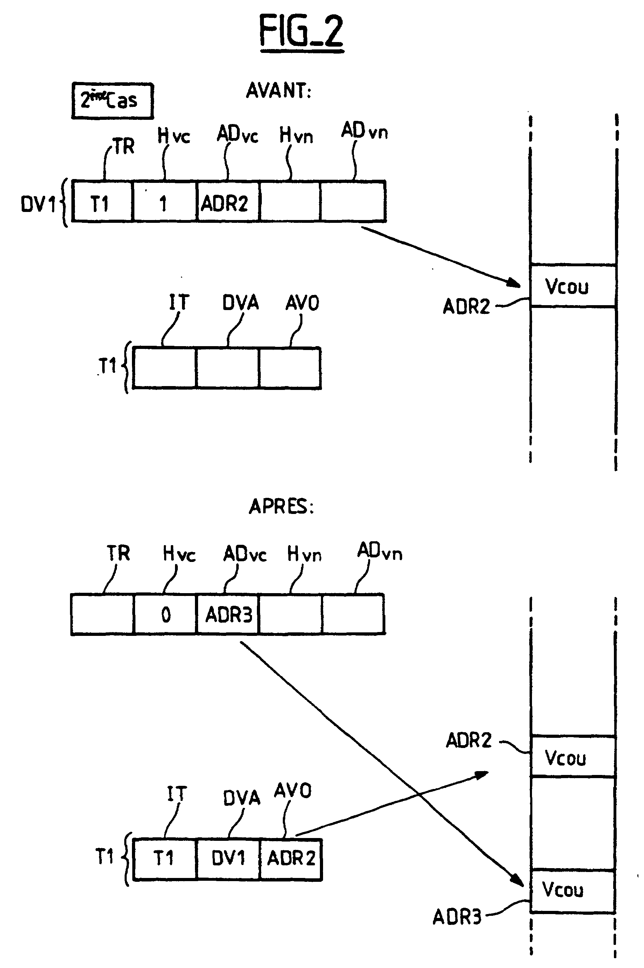

La figure 2 illustre l'application du procédé selon l'invention dans un cas où une transaction T1 a avortée, et où un pointeur attribué à cette transaction T1 référence l'emplacement ADR1 d'une valeur Vcou qui est la valeur courante d'une variable V1. Le gestionnaire de données efface, dans le descripteur DV1 de la variable, l'identité T1 de la transaction avortée, et l'adresse ADR2 de cet emplacement. Il écrit cette adresse ADR2 dans le descripteur de la transaction T1 ; puis relâche le hold attribué au pointeur, en remettant à zéro la valeur de l'indicateur Hvc dans le descripteur de la transaction T1. Puis il attribue un emplacement de mémoire libre à la valeur courante, en donnant une valeur ADR3 à l'adresse ADvc de l'emplacement mémoire contenant la valeur courante de cette variable, dans le descripteur DV1 de cette variable. Ainsi la valeur courante Vcou devient accessible à tous les utilisateurs, puisqu'ils sont libres d'accéder à l'adresse ADR3, alors que la transaction T1 peut continuer à accéder à la valeur courante, pendant le temps nécessaire pour qu'elle retire explicitement le hold, parce qu'elle a fini son traitement hold, ou bien parce qu'elle s'est apperçue qu'elle a été avortée.

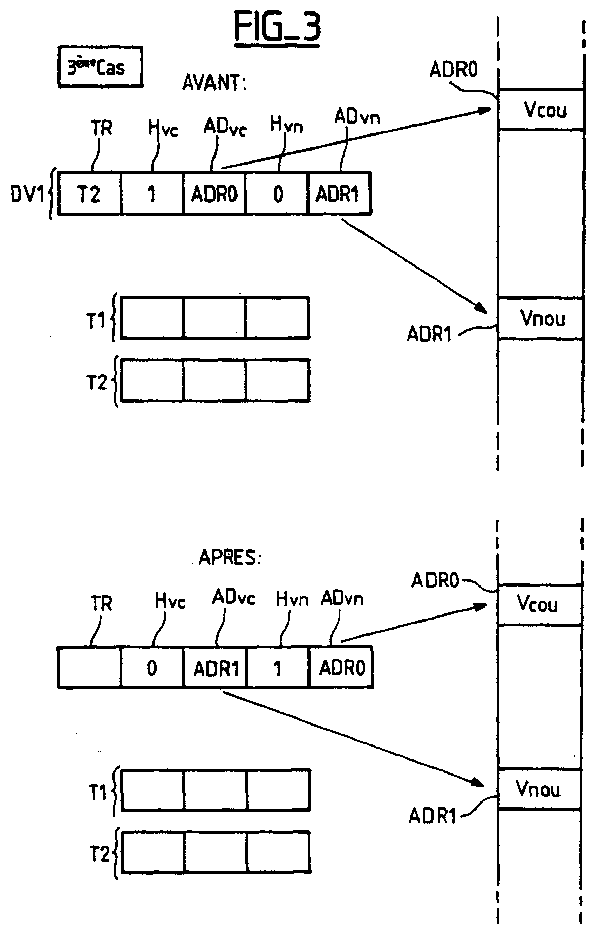

La figure 3 illustre l'application du procédé selon l'invention dans un cas où une première transaction T1 est une transaction avortée à cause d'une seconde transaction T2 qui demande à accéder à la variable considérée, pour écrire une nouvelle valeur Vnou, et qui valide cet accès. La valeur courante Vcou de la variable est donc devenue obsolète. Le gestionnaire de données échange les adresses ADR0 et ADR1 des emplacements qui contiennent respectivement la valeur courante obsolète Vcou et la nouvelle valeur Vnou, dans le descripteur DV1 de cette variable ; et il pose un hold sur l'emplacement ADR0 contenant la valeur courante Vcou, en donnant la valeur un à l'indicateur Hvn dans le descripteur DV1 de la variable, pour empêcher une modification de la valeur obsolète. Puis il relâche le hold attribué au pointeur pour l'emplacement destiné à contenir la valeur courante, et qui contient désormais cette nouvelle valeur Vnou, en donnant la valeur un à l'indicateur Hvc. D'autre part, il efface dans ce descripteur DV1 l'identité T2 de la seconde transaction. Ainsi tous les utilisateurs peuvent accéder à la nouvelle valeur courante Vnou, dans l'emplacement ADR1. Les descripteurs T1 et T2 des transactions sont inchangés. Le traitement de l'avortement de T1 est analogue à celui décrit en se référant à la figure 1.

## Revendications

1. Procédé pour isoler un emplacement de mémoire (AD1) contenant une valeur obsolète d'une variable, dans une mémoire partagée d'un ordinateur, cet emplacement étant référencé par un pointeur pour un accès dans le cadre d'une première transaction (T1), un verrou (H=1) appelé hold étant posé sur cet emplacement et étant attribué à une seule tâche, ce hold interdisant l'accès de cet emplacement à toutes les autres tâches **caractérisé en ce que** :
- si cette première transaction (T1) est une transaction avortée, et :
-- si la valeur obsolète est une nouvelle valeur (Vnou) de cette variable, il consiste à effacer, dans le descripteur (DV1) de cette variable, l'identité (T1) de la transaction avortée, et l'adresse (ADR1) de cet emplacement, et écrire cette adresse dans le descripteur (T1) de ladite transaction ; puis relâcher ce hold (Hvn =0) ;
-- si la valeur obsolète était précédemment la valeur courante de ladite variable, il consiste à effacer, dans le descripteur de ladite variable, l'identité (T1) de la transaction avortée, et l'adresse (ADR2) de cet emplacement, et l'écrire dans le descripteur de ladite transaction ; puis relâcher le hold (Hvc) attribué au pointeur ; puis attribuer un emplacement (ADR3) de mémoire libre à la valeur courante, écrire cette valeur courante (Vcou) dans cet emplacement, et écrire l'adresse (ADR3) de cet emplacement dans le descripteur (DV1) de cette variable ;
- si cette première transaction (T1) est une transaction avortée à cause d'une seconde transaction (T2) qui demande à accéder à cette variable pour écrire une nouvelle valeur (Vnou), et qui valide cet accès, et si la valeur obsolète était précédemment la valeur courante (Vcou) de la variable, il consiste à échanger l'adresse des emplacements qui contiennent respectivement la valeur courante obsolète (Vcou) et la nouvelle valeur (Vnou), dans le descripteur (DV1) de cette variable ; et consiste à poser un hold (Hvn=1) sur l'emplacement (ADR0) contenant la valeur obsolète (Vcou), pour empêcher une modification de la valeur obsolète ; effacer l'identité (T2) de la seconde transaction ; puis relâcher le hold (Hvn=0) attribué au pointeur pour cette nouvelle valeur (Vnou), s'il y en avait un.

## Claims

1. A method of isolating a memory location (ADR1) containing an obsolete value of a variable in a shared memory of a computer, said location being referenced by a pointer for access in the context of a first transaction (T1), a lock known as "a hold" (H=1) being applied to said location and being allocated to a single task, said lock preventing access to said location by all other tasks, the method being **characterized in that**:
· if said first transaction (T1) is a transaction that has aborted, and:
· if the obsolete value is a new value (Vnew) for said variable, then the method consists in deleting from the descriptor (DV1) for said variable the identity (T1) of the aborted transaction, and the address (ADR1) of said location, and in writing said address in the descriptor (T1) of said transaction, and then in releasing the hold (Hvn=0);
· if the obsolete value was previously the current value for said variable, then the method consists in deleting from the descriptor of said variable, the identity (T1) of the aborted transaction and the address (ADR2) of said location, and in writing said address in the descriptor of said transaction; then in releasing the hold (Hvc) allocated to the pointer; then in allocating a free memory location (ADR3) to the current value, and writing said current value (Vcur) in said location, and writing the address (ADR3) of said location in the descriptor (DV1) of the variable; and
· if said first transaction (T1) is a transaction aborted because of a second transaction (T2) which requests access to said variable to write a new value (Vnew) and which validates said access, and if the obsolete value was previously the current value (Vcur) of the variable, then the method consists in swapping the addresses of the locations respectively containing the obsolete current value (Vcur) and the new value (Vnew) in the descriptor (DV1) for said variable; and in putting a hold (Hvn=1) on the location (ABR0) containing the obsolete value (Vcur) to prevent the obsolete value being modified; deleting the identity (T2) of the second transaction; and then releasing the hold (Hvn=0) allocated to the pointer for said new value (Vnew) if there is one.

## Patentansprüche

1. Verfahren zur Isolierung eines Speicherplatzes (AD1), der einen veralteten Wert einer Variablen enthält, im gemeinsam genutzten Speicher eines Computers, wobei auf diesen Platz durch einen Zeiger für einen Zugriff im Rahmen einer ersten Transaktion (T1) verwiesen wird, wobei eine als Hold bezeichnete Sperre (H=1) auf diesen Platz gesetzt ist und einer einzigen Task zugewiesen ist, und wobei dieser Hold den Zugriff auf diesen Speicherplatz für alle anderen Tasks untersagt; **dadurch gekennzeichnet, dass**
- wenn diese erste Transaktion (T1) eine abgebrochene Transaktion ist und:
- wenn der veraltete Wert ein neuer Wert (Vnou) dieser Variablen ist, besteht das Verfahren darin, im Deskriptor (DV1) dieser Variablen die Identität (T1) der abgebrochenen Transaktion und die Adresse (ADR1) dieses Speicherplatzes zu löschen und diese Adresse in den Deskriptor (T1) der genannten Transaktion zu schreiben; anschließend diesen Hold freizugeben (Hvn=0);
- wenn der veraltete Wert zuvor der aktuelle Wert der Variablen war, besteht das Verfahren darin, im Deskriptor dieser Variablen die Identität (T1) der abgebrochenen Transaktion und die Adresse (ADR2) dieses Speicherplatzes zu löschen und sie in den Deskriptor der genannten Transaktion zu schreiben; anschließend den dem Zeiger zugewiesenen Hold (Hvc) freizugeben; anschließend dem aktuellen Wert einen freien Speicherplatz (ADR3) zuzuweisen, diesen aktuellen Wert (Vcou) an diesen Speicherplatz zu schreiben und die Adresse (ADR3) dieses Speicherplatzes in den Deskriptor (DV1) dieser Variablen zu schreiben;
- wenn diese erste Transaktion (T1) eine Transaktion ist, die aufgrund einer zweiten Transaktion (T2) abgebrochen wurde, die den Zugriff auf diese Variable anfordert, um einen neuen Wert (Vnou) zu schreiben, und die diesen Zugriff bestätigt, und wenn der veraltete Wert zuvor der aktuelle Wert (Vcou) der Variablen war, besteht das Verfahren darin, die Adresse der Speicherplätze, die den veralteten aktuellen Wert (Vcou) und den neuen Wert (Vnou) enthalten, im Deskriptor (DV1) dieser Variablen auszutauschen; und es besteht darin, einen Hold (Hvn=1) auf den Speicherplatz (ADR0) zu setzen, der den veralteten Wert (Vcou) enthält, um eine Änderung des veralteten Wertes zu verhindern; die Identität (T2) der zweiten Transaktion zu löschen; anschließend den Hold freizugeben (Hvn=0), der dem Zeiger für diesen neuen Wert (Vnou) zugewiesen wurde, sofern einer vorhanden war.
